# EUROPEAN PATENT SPECIFICATION

(11) **EP 0 405 824 B1**
(45) Date of publication and mention of the grant of the patent: **18.12.1996**
(21) Application number: 90306732.0
(22) Date of filing: 20.06.1990
(51) Int. Cl.: G06F 3/06, G11B 20/10

(54) **Decoding apparatus for digital signals**
Decodierungsgerät für digitale Signale
Appareil de décodage des signaux numériques

(30) Priority: 26.06.1989 JP 165030/89
(43) Date of publication of application: 02.01.1991
(73) Proprietor: SONY CORPORATION, Tokyo 141 (JP)
(72) Inventor: Hosono, Yoshimasa, c/o Patent Division Sony Corp., Tokyo 141 (JP)
(74) Representative: Cotter, Ivan John

(56) References cited:
- EP-A- 0 248 478
- ELEKTRONIK, vol. 35, no. 9, May 1986, München, DE, pp 119-122; R. WILSON: 'MASSENSPEICHER-STEUERCHIPS FUER PROBLEMLOSE SUBSYSTEMKONZEPTE'
- COMPUTER SYSTEMS, vol. 8, no. 2, February 1988, Bromley, GB, pp 25-26; S. CORNISH: 'EXPLOITING THE SCSI BUS'

## Description

This invention relates to decoding apparatus for digital signals, for example, for decoding data reproduced from a compact disc-read only memory (CD-ROM) on which sequential data have been recorded.

A CD-ROM comprising an optical disc of a shape similar to a compact disc for music has been attracting attention as a large-capacity recording medium for data. A CD-ROM is suitable for real-time applications providing sequential data such as music data or picture data, since a CD-ROM can record a long period of sequential data.

For this reason, standards for recording music data or picture data using a CD-ROM, for example, CD-I and CD-ROM XA have been proposed. With such recording of music data or picture data onto a CD-ROM, a man-machine interface can be improved using a voice or an animated picture, and voice mail or picture mail using a computer can be achieved. Thus, the realization of various services using CD-I or CD-ROM XA has been expected.

For handling CD-ROM application programs, a CD-ROM disc driver and a CD-ROM decoder for reproducing the CD-ROM are needed, in addition to a host computer.

The CD-ROM disc driver capable of using real-time application programs is generally connected to the CD-ROM decoder using a special standard interface. This is because the speed of the reproduced data and the speed of the decoded data must be strictly equal in real-time applications.

In recent years, a small computer system interface (SCSI) has frequently been employed for connections between a computer and peripheral equipment. Based on this, there is a demand for the connection of a CD-ROM disc driver and a CD-ROM decoder using an SCSI bus.

However, in principle, the SCSI bus cannot transmit a signal corresponding to the read-out speed of reproduced data from a recording medium. Therefore, it is difficult to make the speeds of reproduced and decoded data equal. For this reason, it has been thought that an SCSI bus cannot be used to connect a CD-ROM disc driver and a CD-ROM decoder.

When a signal corresponding to the speed of reproduced data cannot be transmitted, the CD-ROM disc driver and the CD-ROM decoder operate with their own clock signals. In this case it is impossible to make the playback time of the CD-ROM and the decoding time of the CD-ROM decoder exactly equal.

Data are continuously reproduced from the CD-ROM, and the continuous data are decoded by the CD-ROM decoder. Consequently, even if there is only a slight speed error between the speed of the reproduced data and the decoding speed, the error will accumulate as the playback time increases.

As a result, when a CD-ROM which has recorded music data and picture data is played back, sound jumps or a time difference between the reproduced picture and the reproduced sound may occur.

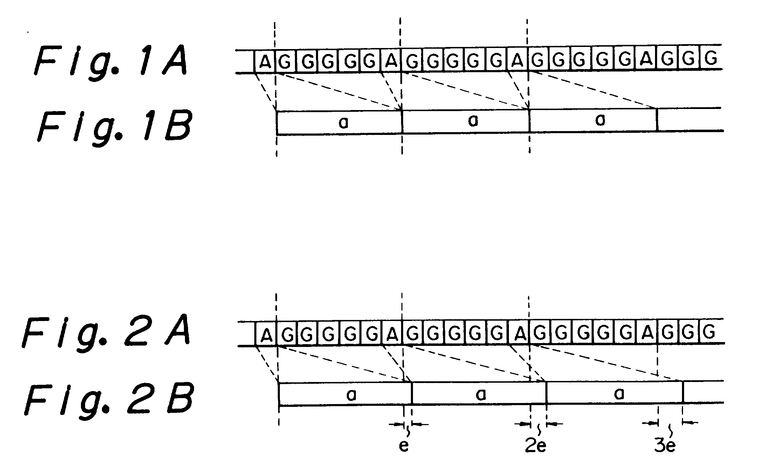

For example, as shown in Figure 1A, it is assumed that a disc which has recorded compressed audio data A and graphic data G is reproduced. If the speed of the reproduced data and the decoding speed coincide with each other, a reproduced and time-base expanded audio signal a coincides with a corresponding reproduced picture as shown in Figure 1B.

On the other hand, Figure 2 shows a case where there is an error between the reproduced data speed and the decoding speed. As indicated in Figure 2A, when the disc which has recorded thereon the compressed audio data A and the graphic data G is reproduced, the reproduced and time-base expanded audio signal a does not coincide with the corresponding reproduced picture, as shown in Figure 2B, if there is an error between the reproduced data speed and the decoding speed. The error e accumulates with increased playback time.

Elektronik, vol. 35, no. 9, May 86, Munchen DE, pages 119-122, "Massenspeicher - Steuerchips for problemlose Subsystemkonzepte", by R. Wilson discloses a decoding system in acccrdance with the precharacterising portion of claim 1, but this document does not address the problem discussed above.

According to the present invention there is provided a decoding system for digital data, the system comprising:
a recording medium driver comprising playback means for playing back sequential digital data from a recording medim;
decoding means comprising a clock generator for generating a clock signal, and a decoding circuit for decoding. in accordance with the clock signal, the sequential digital data transmitted from said recording medium driver; and
an interface line for connecting said recording medium driver to said decoding means for transmission of the digital data;
characterised in that:
said recording medium driver includes means for generating a request signal requesting transmission of the digital data, which request signal is transmitted by said interface line, and in that said decoding means includes detecting means for detecting a leading edge of the request signal, wherein the clock generator generates said clock signal in response to an output signal from said detecting means.

The invention will now be described by way of example with reference to the accompanying drawings, throughout which like parts are referred to by like references, and in which:
Figures 1 and 2 are timing diagrams for previously proposed decoders;
Figure 3 is a block diagram of one embodiment of this invention;
Figure 4 is a block diagram of one example of a CD-ROM disc driver in an embodiment of the invention;
Figures 5 and 6 are timing diagrams; and
Figure 7 is a block diagram of one example of a clock signal generating circuit.

The embodiment is suitable for use in a CD-ROM decoder of the CD-ROM XA standard, for example. In CD-ROM XA, voice data are recorded by adaptive differential pulse-code modulation (ADPCM). The embodiment comprises a host computer 1 and a CD-ROM decoder 2 which are connected to each other. A CRT display 3 is connected to the host computer 1. A CD-ROM disc driver 4 operates under control of a clock from a clock generating circuit 5. The CD-ROM driver 4 and the CD-ROM decoder 2 are connected through an SCSI bus 6.

A clock developing circuit 7 is provided at the CD-ROM decoder 2, and develops a clock using an REQ signal sent from the CD-ROM driver 4. At the CD-ROM decoder 2, a decoding operation is performed using a clock signal formed by the clock developing circuit 7. With the clock signal so developed, the disc reproduction speed of the CD-ROM driver 4 and the decoding speed of the CD-ROM decoder 2 can be made completely equal.

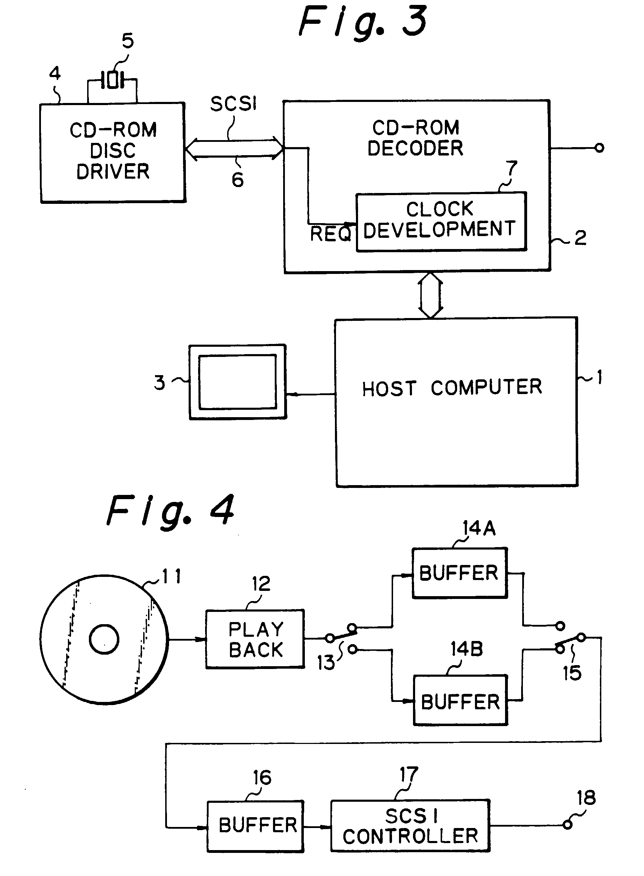

The CD-ROM driver 4 can be constructed as shown in Figure 4, for example, in which a reproduced signal from a disc 11 is supplied to a playback circuit 12. At the playback circuit 12, processing such as EFM modulation, error correction, etc. is effected to decode reproduced data. The output of the playback circuit 12 is supplied to buffer memories 14A and 14B through a switch circuit 13, which is switched at 75 Hz, for example.

The buffer memories 14A and 14B are controlled so that when one is in a write-in state, the other is in a read-out state. Data are written into the buffer memories 14A and 14B at the data rate of reproduced data (for instance, 170 kilobytes/second), and data are read out therefrom at the data rate of the SCSI bus 6 (for example, 1 megabyte/second). Data transfer rate conversion is effected by the buffer memories 14A and 4B.

The outputs of the buffer memories 14A and 14B are fed to a buffer memory 16 through a switch circuit 15, which is switched at 75 Hz, for example.

The output of the buffer memory 16 is supplied to an SCSI controller 17, from which data are sent through an SCSI port 18.

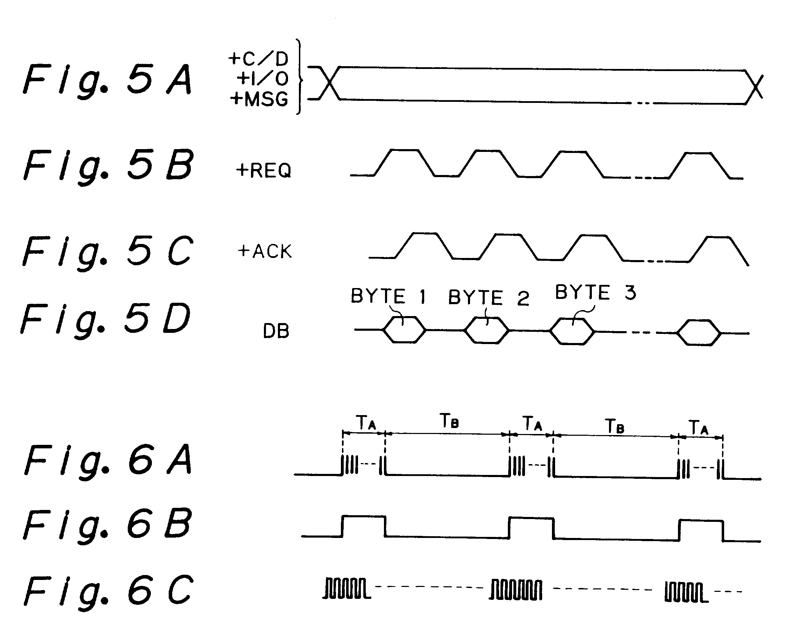

Figure 5 shows an information transfer phase in the SCSI bus 6. By a combination of each signal (Figure 5A) of C/D, I/O and MSG, the kind of information transfer phase to be performed is designated. When the transfer is done in an asynchronous mode in the SCSI bus 6, the transfer is performed while confirming an REQ signal (Figure 5B) and an ACK signal (Figure 5C). Clearly, on the side of the CD-ROM driver 4, the REQ signal is sent after establishing the status of a data bus (Figure 5D). When data are received on the side of the CD-ROM decoder 2, the ACK signal (Figure 5C) is sent back. The status of the data bus is held until the ACK signal is received on the side of the CD-ROM driver 4.

Basically, the SCSI bus has not transferred a signal corresponding to the read-out speed from a disc. For this reason, it has not been possible to connect the CD-ROM driver 4 and the CD-ROM decoder 2 through the SCSI bus 6.

In one embodiment of the invention, a clock is developed using the REQ signal at the clock developing circuit 7 of the CD-ROM decoder 2. With this, the disc reproduction speed of the CD-ROM driver 4 and the decoding speed of the CD-ROM decoder 2 can be made completely equal. For this reason, it is possible to connect the CD-ROM driver 4 and the CD-ROM decoder 2 through the SCSI bus 6.

Data rate conversion is executed in the buffer memories 14A and 14B (Figure 4) of the CD-ROM driver 4, and the transmission rate of data sent through the SCSI bus 6 is higher than the playback transmission rate at the CD-ROM disc driver 4. As a result, as shown in Figure 6A, there occurs an interval TA where data are sent via the SCSI bus 6, and an interval TB, where the data transfer is stopped. The REQ signal is sent each time data are transferred in the interval TA where data are sent via the SCSI bus 6. Therefore, in response to a detection of the REQ signal, the interval TA where the data are sent and the interval TB where the data transfer is stopped can be detected. The interval TA where the data are sent and the interval TB where the data transfer is stopped are switched by a signal based on the clock on the side of the CD-ROM disc driver 4. Namely, the interval TA where the data are sent and the interval TB where the data transfer is stopped are set by the signal of 75 Hz for switching the switching circuits 13 and 15 on the side of the CD-ROM driver 4. From this, by the detection of the interval TA where the data are sent and the interval TB where the data transfer is stopped, information based on the playback speed on the side of the CD-ROM disc driver can be provided.

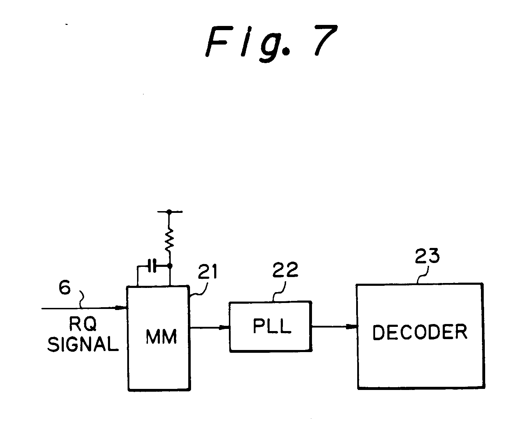

The clock developing circuit 7 at the CD-ROM decoder 2 is formed as shown in Figure 7, to detect the REQ signal and so develop a clock.

In Figure 7, the REQ signal (Figure 6A) is sent from the CD-ROM driver 4 through the SCSI bus 6. The REQ signal is supplied to a monostable multivibrator 21 which is triggered by the REQ signal. As a result, signals corresponding to the interval TA where the data are sent and the interval TB where the data transfer is stopped are provided from the monostable multivibrator 21 as shown in Figure 6B.

The output of the monostable multivibrator 21 is supplied to a PLL 22. A clock signal with a predetermined frequency, which is in synchronism with the output of the monostable multivibrator 21 is derived by the PLL 22 as shown in Figure 6C. The clock signal is supplied to a CD-ROM decoder 23, and corresponds to an operating clock signal of the CD-ROM disc driver 4. Consequently, if the decoding operation of the CD-ROM decoder 2 is controlled by the clock signal from the clock developing circuit 7, the disc playback speed of the CD-ROM driver 4 and the decoding speed of the CD-ROM decoder 2 can be made completely equal.

The invention is not limited to the case of the use of the SCSI and is applicable to the case where another interface is employed to send a signal for requesting a data transfer in the transmission of data.

## Claims

1. A decoding system for digital data, the system comprising:
a recording medium driver (4) comprising playback means (12) for playing back sequential digital data from a recording medium (11);
decoding means (2) comprising a clock generator (22) for generating a clock signal, and a decoding circuit (23) for decoding, in accordance with the clock signal, the sequential digital data transmitted from said recording medium driver (4); and
an interface line (6) for connecting said recording medium driver (4) to said decoding means (2) for transmission of the digital data;
characterised in that:
said recording medium driver (4) includes means (17) for generating a request signal requesting transmission of the digital data, which request signal is transmitted by said interface line (6), and in that said decoding means (2) includes detecting means (21) for detecting a leading edge of the request signal, wherein the clock generator (22) generates said clock signal in response to an output signal from said detecting means (21).

2. A system according to claim 1 wherein said recording medium (11) is an optical disc (11).

3. A system according to claim 2 wherein said optical disc (11) is a CD-ROM, and said sequential data are composed of ADPCM audio data.

4. A system according to any preceding claim wherein said decoding means (2) generates an acknowledge signal when it receives the digital data, and said recording medium driver (4) holds the status of the interface line (6) until it receives the acknowledge signal.

5. A system according to claim 4 wherein the acknowledge signal is transmitted by said interface line (6).

6. A system according to claim 5 wherein said interface line (6) is SCSI.

## Patentansprüche

1. Decodierungssystem für digitale Daten, mit:
einer Aufzeichnungsmedium-Antriebsvorrichtung (4) mit einer Wiedergabeeinrichtung (12) zum Wiedergeben sequentieller digitaler Daten von einem Aufzeichnungsmedium (11);
einer Decodiereinrichtung (2) mit einem Taktgenerator (2) zum Erzeugen eines Taktsignales, und einer Decodierungsschaltung (23) zum Decodieren der von der Aufzeichnungsmedium-Antriebsvorrichtung (4) übermittelten sequentiellen digitalen Daten in Übereinstimmung mit dem Taktsignal; und
einer Schnittstellenleitung (6) zum Verbinden der Aufzeichnungsmedium-Antriebsvorrichtung (4) mit der Decodierungseinrichtung (2) für die Übertragung der digitalen Daten,
**dadurch gekennzeichnet,**
daß die Aufzeichnungsmedium-Antriebsvorrichtung (4) eine Einrichtung (17) zum Erzeugen eines Anforderungssignales aufweist, das die Übertragung der digitalen Daten anfordert, wobei das Anforderungssignal durch die Schnittstellenleitung (6) übertragen wird, und daß die Decodierungseinrichtung (2) eine Detektionseinrichtung (21) zum Detektieren einer Anstiegsflanke des Anforderungssignales aufweist, wobei der Taktgenerator (22) das Taktsignal abhängig von einem Ausgangssignal der Detektionseinrichtung (21) erzeugt.

2. System gemäß Anspruch 1,
wobei das Aufzeichnungsmedium (11) eine optische Platte (11) ist.

3. System gemäß Anspruch 2,
wobei die optische Platte (11) eine CD-ROM ist, und die sequentiellen Daten aus ADPCM-Audiodaten bestehen.

4. System gemäß einem der vorhergehenden Ansprüche,
wobei die Decodierungseinrichtung (2) ein Bestätigungssignal erzeugt, wenn sie die digitalen Daten empfängt, und die Aufzeichnungsmedium-Antriebsvorrichtung (4) den Zustand der Schnittstellenleitung (6) aufrechterhält, bis sie das Bestätigungssignal empfängt.

5. System gemäß Anspruch 4,
wobei das Bestätigungssignal durch die Schnittstellenleitung (6) übertragen wird.

6. System gemäß Anspruch 5,
wobei die Schnittstellenleitung (6) eine SCSI (Schnittstellenleitung für ein kleines Computersystem) ist.

## Revendications

1. Système de décodage pour données numériques, le système comprenant :
un lecteur de support d'enregistrement (4) comprenant un moyen de reproduction (12) pour reproduire des données numériques séquentielles à partir d'un support d'enregistrement (11) ;
un moyen de décodage (2) comprenant un générateur de signal d'horloge (22) pour produire un signal d'horloge, et un circuit de décodage (23) pour décoder, en fonction du signal d'horloge, les données numériques séquentielles transmises depuis ledit lecteur de support d'enregistrement (4) ; et
une ligne d'interface (6) pour connecter ledit lecteur de support d'enregistrement (4) audit moyen de décodage (2) pour transmission des données numériques :
caractérisé en ce que :
ledit lecteur de support d'enregistrement (4) comprend un moyen (17) pour produire un signal de demande demandant la transmission des données numériques, lequel signal de demande est transmis par ladite ligne d'interface (6) ; et en ce que ledit moyen de décodage (2) comprend un moyen de détection (21) pour détecter le front avant du signal de demande, le générateur de signal d'horloge (22) produisant ledit signal d'horloge en réponse à un signal de sortie dudit moyen de détection (21).

2. Système selon la revendication 1, dans lequel ledit support d'enregistrement (11) est un disque optique (11).

3. Système selon la revendication 2, dans lequel ledit disque optique (11) est un CD-ROM (disque optique numérique), et dans lequel lesdites données séquentielles sont composées de données audio modulées par ADPCM (modulation par codage d'impulsions différentielle adaptative).

4. Système selon l'une quelconque des revendications précédentes, dans lequel ledit moyen de décodage (2) produit un signal d'accusé de réception lorsqu'il reçoit les données numériques, et dans lequel ledit lecteur de support d'enregistrement (4) conserve l'état de la ligne d'interface (6) jusqu'à ce qu'il reçoive le signal d'accusé de réception.

5. Système selon la revendication 4, dans lequel le signal d'accusé de réception est transmis par ladite ligne d'interface (6).

6. Système selon la revendication 5, dans lequel ladite ligne d'interface (6) est une SCSI (interface de système pour petit ordinateur).
